# EUROPEAN PATENT SPECIFICATION

(11) **EP 2 829 987 B1**
(45) Date of publication and mention of the grant of the patent: **21.09.2016**
(21) Application number: 14174928.3
(22) Date of filing: 30.06.2014
(51) Int. Cl.: G06F 13/16, H03M 7/30, H04N 19/107, H04N 19/127, H04N 19/156, H04N 19/176, H04N 19/436

(54) **Performance control method for video coding system and coder**
Leistungssteuerungsverfahren für Videocodierungssystem und Codierer
Procédé de contrôle de performance pour système de codage vidéo et codeur

(30) Priority: 22.07.2013 CN 201310309722
(43) Date of publication of application: 28.01.2015
(73) Proprietor: Huawei Technologies Co., Ltd., Longgang District Shenzhen, Guangdong 518129 (CN)
(72) Inventor: Li, Ming, 518129 Shenzhen (CN)
(74) Representative: Thun, Clemens

(56) References cited:
- EP-A1- 1 775 961
- US-A1- 2007 030 899

## Description

### TECHNICAL FIELD

The present invention relates to the field of video coding, and in particular, to a performance control method for a video coding system and a coder.

### BACKGROUND

A running video coder often encounters a problem of uncontrollable processing performance, mainly because of the following reasons: (1) Due to impacts of bus latency, data needed by the video coder cannot be acquired in time, and therefore the video coder keeps waiting for the data to be processed; (2) images change dramatically, which results in a longer processing time of a computing module in algorithm tools (tools) of the video coder, for example, motion estimation does not converge and multi-mode prediction time is excessively long.

In the prior art, when a problem of insufficient performance is encountered, a usual solution is to narrow a search window or directly disable certain tools. This solution, however, degrade code compression efficiency. For example, a bus impact is relieved by reducing access to bus data. In a video coder, a most typical method for reducing access to bus data is reducing loading of reference frame data in a motion estimation process, and generally, reducing the number of reference frames, and more typically, reducing a size of a search window. This method effectively reduces the impact of bus latency, but code compression efficiency is degraded as reference frames are reduced.

In another prior art, in video coding, disabling a fractional pixel motion (Fractional sample) estimation function can reduce the computation duration but, with factional pixel motion estimation function disabled, only integer pixel motion estimation is used, resulting in a drop of compression efficiency, which is especially obvious in large-scale complex motions.

### SUMMARY

An embodiment of the present invention provides a performance control method for a video coding system, in order to solve the problem that coding performance is uncontrollable.

According to a first aspect, a performance control method is provided for a video coding system comprising a 5-stage pipeline of integer pixel motion estimation (inter ME), fractional pixel motion estimation (frac ME), intra-prediction (intra), mode decision (mode decision), and loop filter/entropy coding (dblk/vlc), wherein the method comprises:
detecting whether a time interval for a frame loading of a reference frame is higher than or equal to a first preset threshold;
if the time interval for frame loading of the reference frame is higher than or equal to the first preset threshold, disabling loading of a next reference frame and limiting a duration of integer pixel motion estimation (inter ME) for a macroblock n being processed by the inter pixel motion estimation (inter ME) after performing the limitation of duration for the macroblock n; and
detecting whether the duration for integer pixel motion estimation (inter ME) for a macroblock n-1 is higher or equal to a second preset threshold;
if the duration for the macroblock n-1 is higher than or equal to the second preset threshold,limiting the duration of integer pixel motion estimation (inter ME) for macroblock n, wherein n is an integer.

According to a second aspect, a coder configured to perform the above mentioned method is provided.

The present invention provides a performance control method for a video coding system. The method includes: detecting whether a bus performance value is higher than or equal to a preset bus performance threshold and decreasing, when the bus performance value is higher than or equal to the preset bus performance threshold, the bus performance value and a computing performance value; and detecting whether the computing performance value is higher than or equal to a preset computing performance threshold and decreasing, when the computing performance value is higher than or equal to the preset computing performance threshold, the computing performance value, in order to make processing performance of a coder higher than or equal to preset processing performance, thereby avoiding insufficient coder performance due to an impact of system status or a coded image on the coder.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a performance control method for a video coding system according to an embodiment of the present invention;
FIG. 2 is a schematic diagram of a performance control method for a video coding system according to an embodiment of the present invention;
FIG. 3 is a schematic diagram of a performance control method for a video coding system according to an embodiment of the present invention;
FIG 4 is a structural diagram of a coder according to an embodiment of the present invention; and
FIG. 5 is a structural diagram of a coder according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

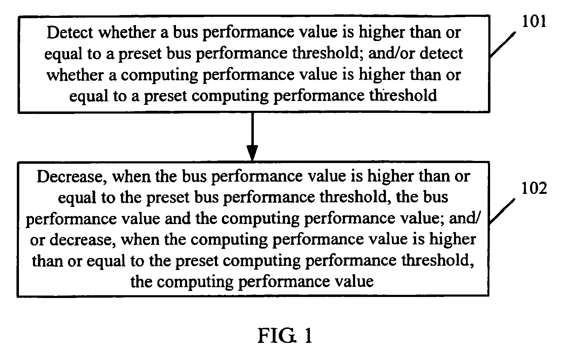

FIG. 1 is a flowchart of a performance control method for a video coding system according to an embodiment of the present invention. As shown in FIG. 1, the method includes the following steps:
Step 101: Detect whether a bus performance value is higher than or equal to a preset bus performance threshold; and/or
   detect whether a computing performance value is higher than or equal to a preset computing performance threshold.
Step 102: Decrease, when the bus performance value is higher than or equal to the preset bus performance threshold, the bus performance value and the computing performance value; and/or
   decrease, when the computing performance value is higher than or equal to the preset computing performance threshold, the computing performance value.

Optionally, the decreasing, when the bus performance value is higher than or equal to the preset bus performance threshold, the bus performance value and the computing performance value includes:
disabling, when the bus performance value is higher than or equal to the preset bus performance threshold, loading of macroblock reference data in a next frame and decreasing the computing performance value of a coder.

Optionally, the decreasing, when the bus performance value is higher than or equal to the preset bus performance threshold and the computing performance value is higher than or equal to the preset computing performance threshold, the bus performance value and the computing performance value includes:
disabling, when the bus performance value is higher than or equal to the preset bus performance threshold, loading of macroblock reference data in a next frame and decreasing the computing performance value of the coder.

According to an optional embodiment, the method further includes:
retaining, when the bus performance value is lower than the preset bus performance threshold, the original computing performance value of the coder.

Specifically, bus_real_cnt is used to identify the bus performance value, which is a bus access duration, pro_real_cnt is used to identify the computing performance value, which is a computation duration of the coder, mb_real_cnt is used to identify the preset bus performance threshold, which is the actual work time of the coder, and exp_cnt is used to identify the preset computing performance threshold, which is the computation duration of the coder in actual working.

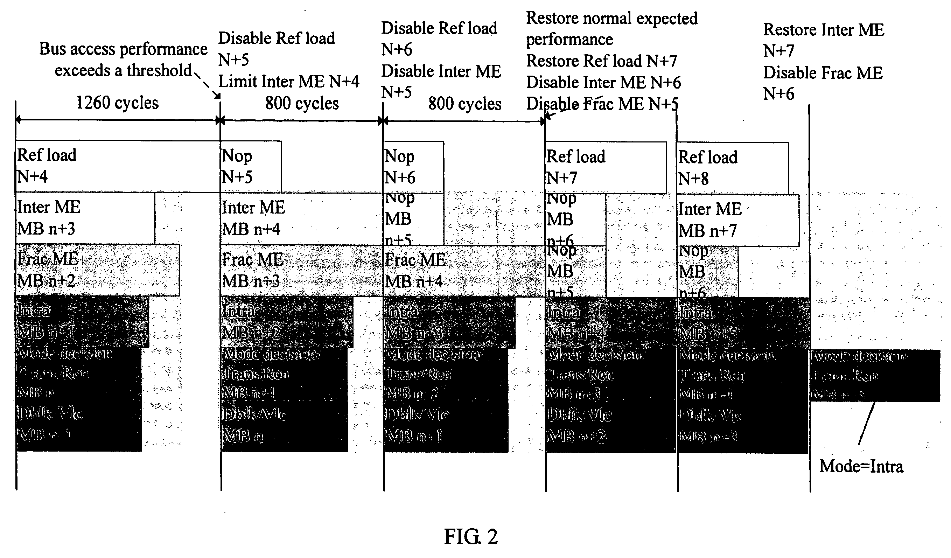

FIG. 2 is a schematic diagram of a performance control method for a video coding system according to an embodiment of the present invention. As shown in FIG. 2, it is assumed that exp_cnt is 840 cycle/MB. A computing part of a typical coder includes a 5-stage pipeline: integer pixel motion estimation (inter ME), fractional pixel motion estimation (frac ME), intra-prediction (intra), mode decision (mode decision), and loop filter/entropy coding (dblk/vlc). In addition, the processing time of each pipeline stage is fixed, which is 400 to 1000 cycle/MB for inter ME, 800 cycle/MB for frac ME, 740 cycle/MB for Intra, 700 cycle/MB for mode decision, and 700 cycle/MB for dblk/vlc. If at ref load, that is, at a stage n+4 of reference frame loading, overall performance of the coder fulfills the bus_real_cnt greater than the mb_real_cnt, at a next n+5 stage, loading data of reference frame n+5 is disabled and computing at an inter ME n+4 stage is restricted. Because performance at an inter ME stage is unsteady, to make up for an overhead introduced by data loading at the previous stage, that is, n+4 ref load, it is necessary that subsequent performance of the computing module be lower than 840 cycle/MB. In addition, inter ME/frac ME also needs to be disabled at an n+5 stage because an intra-frame macroblock mode needs to be decided at the stage of mode decision, and therefore information related to an inter-frame macroblock does not need to be computed. If, at the end of the ref load n+5 stage, the overall performance of the coder is still not restored to the normal expected performance, data loading at a stage n+6 remains disabled, as shown in FIG 2. Similarly, corresponding processing is performed in other pipelines until the expected performance is restored.

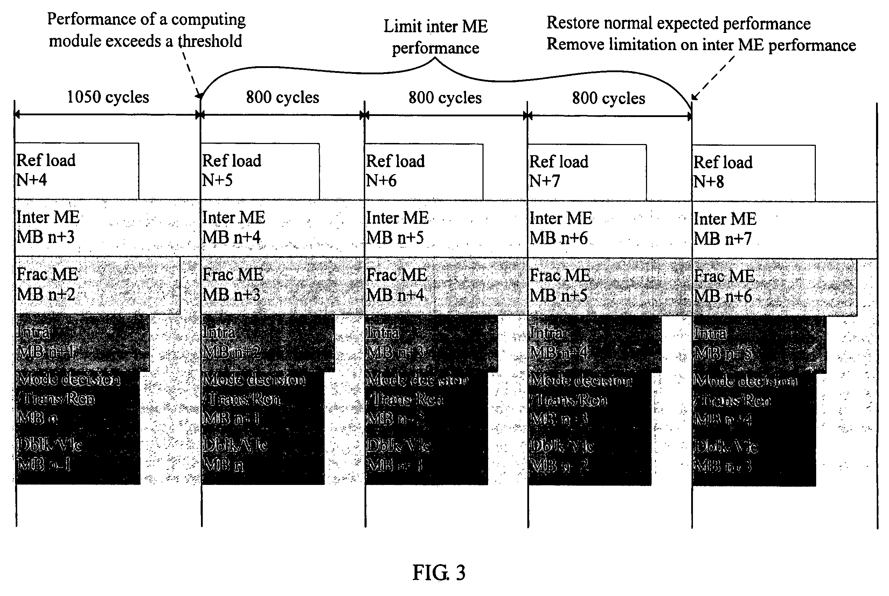

FIG. 3 is a schematic diagram of a performance control method for a video coding system according to an embodiment of the present invention. As shown in FIG 3, it is assumed that exp_cnt is 840 cycle/MB. A computing part of a typical coder includes a 5-stage pipeline: integer pixel motion estimation (inter ME), fractional pixel motion estimation (frac ME), intra-prediction (intra), mode decision (mode decision), and loop filter/entropy coding (dblk/vlc). In addition, the processing time of each pipeline stage is fixed, which is 400 to 1000 cycle/MB for inter ME, 800 cycle/MB for frac ME, 740 cycle/MB for Intra, 700 cycle/MB for mode decision, and 700 cycle/MB for dblk/vlc. If, at an Inter ME n+3 stage, pro_real_cnt is higher than exp_cnt, computing performance of Inter ME is limited to be the same as the performance of Frac ME at a next n+4 stage until the overall performance reaches the normal expected performance. As shown in FIG. 3, the performance limitation for inter ME is not removed until pipeline stage n+7.

The present invention discloses a performance control method for a video coding system. The method includes: detecting whether a bus performance value is higher than or equal to a preset bus performance threshold and decreasing, when the bus performance value is higher than or equal to the preset bus performance threshold, the bus performance value and a computing performance value; and/or detecting whether the computing performance value is higher than or equal to a preset computing performance threshold and decreasing, when the computing performance value is higher than or equal to the preset computing performance threshold, the computing performance value, in order to make processing performance of a coder higher than or equal to preset processing performance, thereby avoiding insufficient coder performance due to an impact of system status or a coded image on the coder.

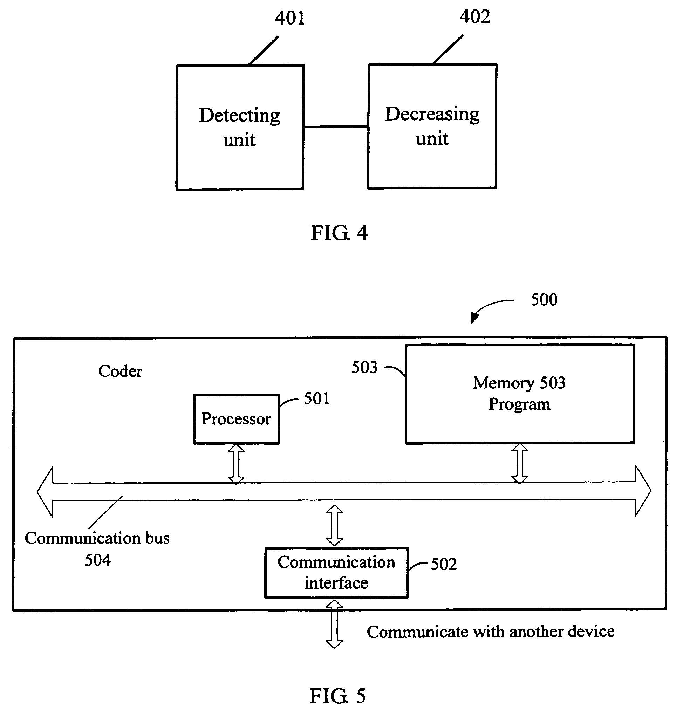

FIG 4 is a structural diagram of a coder according to an embodiment of the present invention. As shown in FIG. 4, the coder includes the following units:
a detecting unit 401, configured to detect whether a bus performance value is higher than or equal to a preset bus performance threshold; and/or
detect whether a computing performance value is higher than or equal to a preset computing performance threshold;
a decreasing unit 402, configured to decrease, when the bus performance value is higher than or equal to the preset bus performance threshold, the bus performance value and the computing performance value; and/or
decrease, when the computing performance value is higher than or equal to the preset computing performance threshold, the computing performance value.

Optionally, the decreasing unit 402 is specifically configured to:
disable, when the bus performance value is higher than or equal to the preset bus performance threshold, loading of macroblock reference data in a next frame and decrease the computing performance value of the coder.

Optionally, the decreasing unit 402 is specifically configured to:
decrease, when the computing performance value is higher than or equal to the preset computing performance threshold, the computing performance value of the coder.

The coder further includes a retaining unit, where the retaining unit is specially configured to:
retain, when the bus performance value is lower than the preset bus performance threshold, the original computing performance value of the coder.

Specifically, bus_real_cnt is used to identify the bus performance value, which is a bus access duration, pro_real_cnt is used to identify the computing performance value, which is a computation duration of the coder, mb_real_cnt is used to identify the preset bus performance threshold, which is an actual working time of the coder, and exp_cnt is used to identify the preset computing performance threshold, which is a computation duration of the coder in actual working.

For details, reference may be made to descriptions of FIG. 2 and FIG. 3 in the method embodiments, and details are not described here again.

The present invention provides a coder. The coder is configured to detect whether a bus performance value is higher than or equal to a preset bus performance threshold and decrease, when the bus performance value is higher than or equal to the preset bus performance threshold, the bus performance value and a computing performance value; and/or detect whether a computing performance value is higher than or equal to a preset computing performance threshold and decrease, when the computing performance value is higher than or equal to the preset computing performance threshold, the computing performance value, in order to make processing performance of the coder higher than or equal to preset processing performance, thereby avoiding insufficient coder performance due to an impact of system status or a coded image on the coder.

FIG. 5 is a structural diagram of a coder according to an embodiment of the present invention. Referring to FIG. 5, a coder 500 according to an embodiment of the present invention is provided. Specific implementation of the coder is not limited to this specific embodiment of the present invention. The coder 500 includes:
a processor (processor) 501, a communications interface (Communications Interface) 502, a memory (memory) 503, and a bus 504.

The processor 501, communications interface 502, and memory 503 communicate with each another via the bus 504.

The communications interface 502 is configured to communicate with another device.

The processor 501 is configured to execute a program.

Specifically, the program may include program code, where the program code includes computer operation instructions.

The processor 501 may be a central processing unit CPU, or an application specific integrated circuit ASIC (Application Specific Integrated Circuit), or be configured as one or more integrated circuits that implement one or more embodiments of the present invention.

The memory 503 is configured to store the program. The memory 503 may include a high-speed RAM memory or a non-volatile memory (non-volatile memory), for example, at least one magnetic disk memory. The program may specifically include:
detecting whether a bus performance value is higher than or equal to a preset bus performance threshold and decreasing, when the bus performance value is higher than or equal to the preset bus performance threshold, the bus performance value and a computing performance value; and/or
detecting whether a computing performance value is higher than or equal to a preset computing performance threshold and decreasing, when the computing performance value is higher than or equal to the preset computing performance threshold, the computing performance value.

The decreasing, when the bus performance value is higher than or equal to the preset bus performance threshold, the bus performance value and a computing performance value includes:
disabling, when the bus performance value is higher than or equal to the preset bus performance threshold, loading of macroblock reference data in a next frame and decreasing the computing performance value of the coder.

The decreasing, when the bus performance value is higher than or equal to the preset bus performance threshold and the computing performance value is higher than or equal to the preset computing performance threshold, the bus performance value and the computing performance value includes:
disabling, when the bus performance value is higher than or equal to the preset bus performance threshold, loading of the macroblock reference data in the next frame and decreasing the computing performance value of the coder.

The decreasing, when the computing performance value is higher than or equal to the preset computing performance threshold, the computing performance value includes:
decreasing, when the computing performance value is higher than or equal to the preset computing performance threshold, the computing performance value of the coder.

The method further includes:
retaining, when the bus performance value is lower than the preset bus performance threshold, the original computing performance value of the coder.

The present invention provides a coder. The coder is configured to detect whether a bus performance value is higher than or equal to a preset bus performance threshold and decrease, when the bus performance value is higher than or equal to the preset bus performance threshold, the bus performance value and a computing performance value; and/or detect whether a computing performance value is higher than or equal to a preset computing performance threshold and decrease, when the computing performance value is higher than or equal to the preset computing performance threshold, the computing performance value, in order to make processing performance of the coder higher than or equal to preset processing performance, thereby avoiding insufficient coder performance due to an impact of system status or a coded image on the coder.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The disclosed are merely exemplary embodiments of the present invention, but are not intended to limit the scope of the present invention. Equivalent variations figured out according to the claims shall fall within the protection scope of the present invention.

## Claims

1. A performance control method for a video coding system comprising a 5-stage pipeline of integer pixel motion estimation (inter ME), fractional pixel motion estimation (frac ME), intra-prediction (intra), mode decision (mode decision), and loop filter/entropy coding (dblk/vlc), wherein the method comprises:
detecting whether a time interval for a frame loading of a reference frame is higher than or equal to a first preset threshold;
if the time interval for frame loading of the reference frame is higher than or equal to the first preset threshold, disabling loading of a next reference frame and limiting a duration of integer pixel motion estimation (inter ME) for a macroblock n being processed by the integer pixel motion estimation (inter ME) after performing the limitation of duration for the macroblock n;
and
detecting whether the duration for integer pixel motion estimation (inter ME) for a macroblock n-1 is higher or equal to a second preset threshold;
if the duration for the macroblock n-1 is higher than or equal to the second preset threshold,limiting the duration of integer pixel motion estimation (inter ME) for macroblock n,
wherein n is an integer.

2. A coder configured to perform a method according to claim 1.

## Patentansprüche

1. Leistungssteuerungsverfahren für ein Videocodiersystem, das eine 5-stufige Pipeline von ganzzahliger Pixelbewegungsschätzung, Inter-ME, gebrochener Pixelbewegungsschätzung, Frac-ME, Intraprädiktion-, Intra-, Modusentscheidungs-und Schleifenfilter-/Entropie-Codierung, dblk/vlc, umfasst, wobei das Verfahren Folgendes umfasst:
Detektieren, ob ein Zeitintervall für ein Rahmenladen eines Referenzrahmens größer oder gleich einer ersten voreingestellten Schwelle ist;
falls das Zeitintervall zum Rahmenladen des Referenzrahmens größer oder gleich der ersten voreingestellten Schwelle ist, Blockieren des Ladens eines nächsten Referenzrahmens . und Begrenzen einer Dauer von ganzzahliger Pixelbewegungsschätzung, Inter-ME, für einen Makroblock n, der von der ganzzahligen Pixelbewegungsschätzung, Inter-ME, nach dem Durchführen der Begrenzung der Dauer für den Makroblock n, verarbeitet wird;
und
Detektieren, ob die Dauer für ganzzahlige Pixelbewegungsschätzung, Inter-ME, für einen Makroblock n-1 größer oder gleich einer zweiten voreingestellten Schwelle ist;
falls die Dauer für den Makroblock n-1 größer oder gleich der zweiten voreingestellten Schwelle ist, Begrenzen der Dauer für ganzzahlige Pixelbewegungsschätzung, Inter-ME, für den Makroblock n,
wobei n eine ganze Zahl ist.

2. Codierer, der ausgelegt ist zum Durchführen eines Verfahrens nach Anspruch 1.

## Revendications

1. Procédé de contrôle de performance pour un système de codage vidéo comprenant une chaîne de traitement à 5 étapes d'estimation de mouvement par pixel entier (inter ME), d'estimation de mouvement par pixel fractionnel (frac ME), de prédiction intra (intra), de décision de mode (mode decision), et de filtre en boucle/codage entropique (dblk/vlc), le procédé comprenant :
détecter si un intervalle de temps pour un chargement de trame d'une trame de référence est supérieur ou égal à un premier seuil préétabli ;
si l'intervalle de temps pour le chargement de trame de la trame de référence est supérieur ou égal au premier seuil préétabli, désactiver le chargement d'une trame de référence suivante et limiter une durée d'estimation de mouvement par pixel entier (inter ME) pour un macrobloc n traité par l'estimation de mouvement de pixel entier (inter ME) après avoir effectué la limitation de durée pour le macrobloc n ;
et
détecter si la durée de l'estimation de mouvement par pixel entier (inter ME) pour un macrobloc n-1 est supérieure ou égale à un deuxième seuil préétabli ;
si la durée pour le macrobloc n-1 est supérieure ou égale au deuxième seuil préétabli, limiter la durée de l'estimation de mouvement par pixel entier (inter ME) pour le macrobloc n,
n étant un entier.

2. Codeur configuré pour mettre en oeuvre un procédé selon la revendication 1.
